(19) Europäisches Patentamt

European Patent Office

Office européen des brevets

(11) **EP 1 008 898 A1**

(12) **EUROPEAN PATENT APPLICATION**
published in accordance with Art. 158(3) EPC

(43) Date of publication:
**14.06.2000 Bulletin 2000/24**

(51) Int. Cl.$^7$: **G02F 1/35**, H04J 14/02

(21) Application number: **99926827.9**

(86) International application number:
**PCT/JP99/03414**

(22) Date of filing: **25.06.1999**

(87) International publication number:
**WO 00/00866 (06.01.2000 Gazette 2000/01)**

(84) Designated Contracting States:
**DE FR IT**

(30) Priority: **29.06.1998 JP 18228198**

(71) Applicant:
**The Furukawa Electric Co., Ltd.
Tokyo 100-8322 (JP)**

(72) Inventors:
• **ASO, Osamu,
The Furukawa Electric Co., Ltd.
Chiyoda-ku, Tokyo 100-8322 (JP)**

• **NAMIKI, Shu,
The Furukawa Electric Co., Ltd.
Chiyoda-ku, Tokyo 100-8322 (JP)**

(74) Representative:
**Hillier, Peter et al
Reginald W. Barker & Co.,
Cliffords Inn
Fetter Lane
London EC4A 1BY (GB)**

(54) **WAVELENGTH MULTIPLEXING OPTICAL TRANSMISSION SYSTEM AND WAVELENGTH CONVERTER FOR WAVELENGTH MULTIPLEXING OPTICAL TRANSMISSION**

(57) A wavelength division multiplexing optical transmission system in which wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2 \lambda_{12} \lambda_{21}/(\lambda_{12} + \lambda_{21})$) under the phase matching condition of four wave mixing, thereby realizing wavelength division multiplexing communication between different wavelength bands. If the wavelength of the pumping light belongs to the wavelength band before or after the wavelength conversion, the wavelength of the wavelength division multiplexed signal light in the wavelength band, which is not the object to be subjected to wavelength conversion, and the wavelength of the pumping light are shifted from each other to be arranged without overlapping with each other.

FIG. 2

EP 1 008 898 A1

**Description**

BACKGROUND OF THE INVENTION

Field of the Invention

The present invention relates to a wavelength division multiplexing optical transmission system with band conversion and a wavelength converter for wavelength division multiplexing optical transmission to effect band conversion, and more particularly, it relates to wavelength conversion between bands obtained from gain property of an optical amplifier using an erbium doped optical fibers. The wavelength converter for wavelength division multiplexing optical transmission according to the present invention is available to not only wavelength conversion of wavelength division multiplexed signal light but also wavelength conversion of various lights.

Related Background Art

In recent years, long distance and great capacity optical transmission has been performed by using an erbium doped optical fiber amplifier (referred to as "EDFA" hereinafter). In this field of art, a transmitting method utilizing a wavelength division multiplexing (referred to as "WDM" hereinafter) system has been noticed as one of promising techniques.

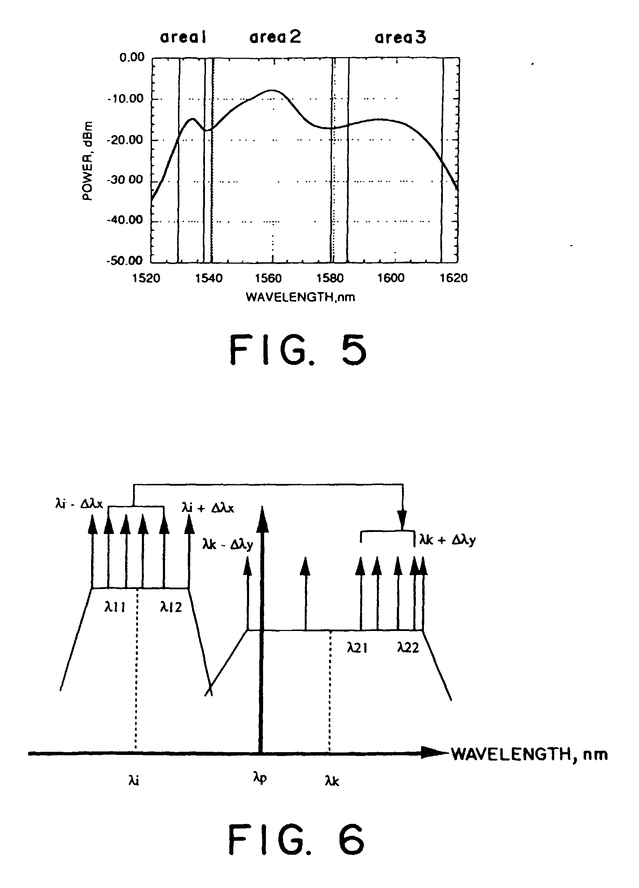

As shown in Fig. 5, in the EDFA, a gain band of signal light is generally classified into three band zones. In the past, transmitting tests have been effected by mainly using two band zones nearer a short wavelength side (i.e., a wavelength band from 1530 nm to 1560 nm having center wavelength of 1550 nm). The band from 1530 nm to 1560 nm is also referred to as C-band. However, in the 1990's, possibility of use of a long wavelength band having center wavelength of 1580 nm in actual transmission by optimizing a length of he erbium doped optical fiber has been pointed out by Massicott of British Telecom and the other researches, and, thereafter, transmission techniques using longer wavelength than C-band has been established on the basis of various investigations. Early in 1998, actual transmission tests have been reported. Due to the above-mentioned techniques, the WDM found a new field in the long wavelength band (from 1569 nm to 1610 nm). Such a band may be referred to as L-band. In this specification, when bands in which the EDFA has gain are referred to, center wavelengths are used as representative values so that they are referred to as 1530 nm band, 1560 nm band, 1585 nm band and the like, for example.

In WDM transmission systems using the conventional EDFA, signal light channels were distributed in one or more of the above-mentioned three bands, or two bands nearer the short wavelength were flattened to have wavelengths from 1530 nm to 1565 nm and from 1569 nm to 1610 nm, respectively and signal light channels were distributed in these two bands. In the latter case, the band from 1530 nm to 1565 nm may be referred to as C-band, and the band from 1569 nm to 1610 nm may be referred to as L-band. The following Table 1 shows several examples of the channels and wavelength bands in the WDM systems which have been reported till now:

Table 1

| | short wavelength side limit | long wavelength side limit | band | channel number/space |
|---|---|---|---|---|
| KDD | 1551. 0 nm | 1563. 0 nm | 12. 0 nm | 16ch. / 0. 8 nm |
| Lucent | 1536. 6 nm | 1560. 0 nm | 23. 6 nm | 60ch. / 0. 4 nm |
| Lucent | 1569. 4 nm | 1601. 4 nm | 32. 0 nm | 40ch. /0. 8 nm |
| NTT | 1543. 0 nm | 1558. 3 nm | 15. 3 nm | 20ch. /0.765 nm |
| NTT | 1573. 7 nm | 1598. 0 nm | 24. 3 nm | 30ch. /0. 81 nm |
| Tyco | 1540. 6 nm | 1559. 5 nm | 18. 9 nm | 64ch. /0. 32 nm |
| Seoul National Univ | 1531. 0 nm | 1563. 0 nm | 32. 0 nm | 41ch. /0. 8 nm |
| National Chiao Tung Univ. | 1532. 0 nm | 1556. 0 nm | 24. 0 nm | 16ch. /1. 6 nm |

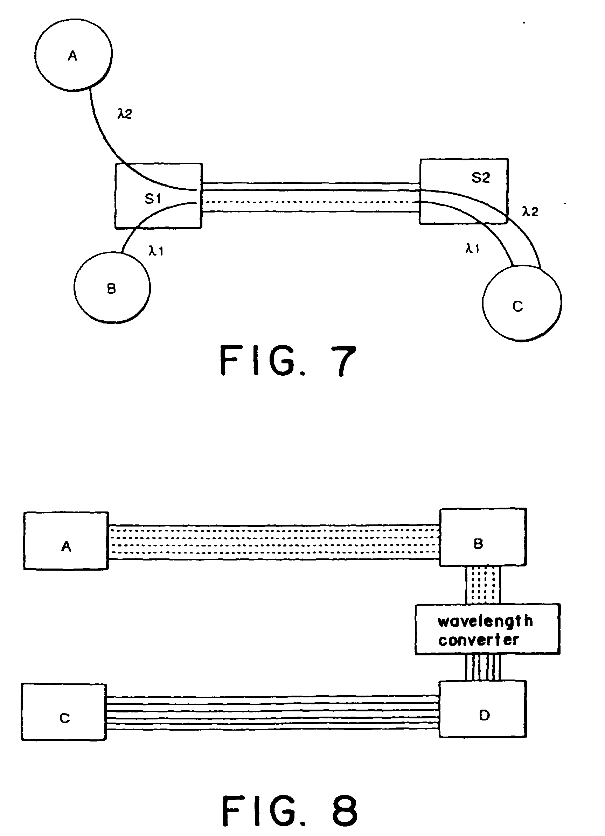

In the WDM system using the EDFA having the gain bands in this way, since transmission systems using 1530 nm band, 1560 nm band, 1585 nm band or combination thereof will be constructed, communication networks connecting between these WDM systems will be expected in the future. For example, as shown in Fig. 7, in a case where stations $S_1$ and $S_2$ are interconnected by a WDM system having wavelengths of $\lambda_1$, $\lambda_2$ and communication using the wavelength $\lambda_2$ is effected between nodes A and C and communication using the wavelength $\lambda_1$ is effected between nodes B and C, by adding a wavelength converter for converting the wavelength $\lambda_1$ into $\lambda_2$ and the wavelength $\lambda_2$ into $\lambda_1$ to the station $S_1$ so that communication is effected by using signal light having the wavelength $\lambda_1$ between the node A and the station $S_1$ and communication is effected by using signal light having the wavelength $\lambda_2$ between the node B and the station S and these signal light are wavelength-converted by the wavelength converter, communication can be effected between the nodes A and B without greatly altering or modifying the system.

Further, as shown in Fig. 8, in a case where it is designed so that there are two independent WDM systems and operation is performed with 1550 nm band between stations A and B and operation is performed with 1580 nm band between stations C and D, by providing a wavelength converter between the stations B and D to convert the 1550 nm band into the 1580 nm band and the 1580 nm band into the 1550 nm band, information can newly been shared between the stations A and D.

In the WDM systems, the wavelength converters have been desired in various locations. One representative wavelength converter is of four wave mixing type (referred to as "FWM" hereinafter) utilizing non-linearity of an optical fiber. In this FWM wavelength converter, when a high intensity pumping light having frequency $f_p$ different from frequency $f_s$ of a signal light is incident on an optical fiber having non-linearity, the frequency $f_s$ of the signal light is converted into frequency $f_{FWM}$ (= $2 f_p$ - $f_s$). In general, in the WDM system, since the frequencies before and after the wavelength conversion are previously determined and the pumping light is determined by such frequencies, for example, in order to wavelength-convert a wavelength division multiplexed signal light having wavelength from $\lambda_{11}$ to $\lambda_{12}$ ($\lambda_{12} > \lambda_{11}$) shown in Fig. 6 into a wavelength division multiplexed signal light having wavelength from $\lambda_{21}$ to $\lambda_{22}$ ($\lambda_{22} > \lambda_{21} > \lambda_{12}$), a wavelength $\lambda_p$ of the pumping light is determined as follows in dependence upon a phase matching condition of the FWM:

$$\lambda_p = 2\lambda_{12}\lambda_{21}/(\lambda_{12} + \lambda_{21}) \tag{1}$$

In the FWM wavelength converter in which the wavelength $\lambda_p$ of the pumping light is determined by the frequencies before and after conversion, if there is any signal light other than the signal light to be wavelength-converted in the system, the wavelength of such signal light may be overlapped with the wavelength of the pumping light. For example, as shown in Fig. 6, when the wavelength division multiplexed signal light having the wavelength from $\lambda_{11}$ to $\lambda_{12}$ ($\lambda_{12} > \lambda_{11}$) is distributed in a gain band having wavelength from ($\lambda_i - \Delta \lambda_x$) to ($\lambda_i + \Delta \lambda_x$) and the wavelength division multiplexed signal light having the wavelength from $\lambda_{21}$ to $\lambda_{22}$ ($\lambda_{22} > \lambda_{21} > \lambda_{12}$) is distributed in a gain band having wavelength from ($\lambda_k - \Delta \lambda_y$) to ($\lambda_k + \Delta \lambda_y$) and another signal light exists between the wavelengths ($\lambda_k - \Delta \lambda_y$) and $\lambda_{21}$, if the wavelength $\lambda_p$ of the pumping light has a relationship ( $\lambda_k - \Delta \lambda_y \leqq \lambda_p \leqq \lambda_{21}$ ), the possibility of overlap between the pumping light and the signal light will be increased. If the pumping light is overlapped with the signal light, transmission ability of the signal light may be worsened.

Further, in the conventional wavelength conversion, only band conversion in the C-band was performed, but the wavelength conversion adequately utilizing the band of the EDFA extending to the L-band was not effected.

SUMMARY OF THE INVENTION

In the WDM transmission shown in Fig. 6, when the wavelength from $\lambda_{11}$, to $\lambda_{12}$ ($\lambda_{11} < \lambda_{12}$) of the signal light among the wavelength division multiplexed signal lights distributed in the wavelength band from ($\lambda_i - \Delta \lambda_x$) to ($\lambda_i + \Delta \lambda_x$) is converted into the wavelength from $\lambda_{21}$ to $\lambda_{22}$ ($\lambda_{12} < \lambda_{21}$) of the WDM system operated in a range ($\lambda_k - \Delta \lambda_y$) to ($\lambda_k + \Delta \lambda_y$) of another wavelength band or vice versa, the wavelength $\lambda_p$ of the pumping light must be set to a value obtained by the above equation (1). However, the following two cases may occur in dependence upon the manner for setting the wavelength conversion area:

$$\lambda_{12} \leqq \lambda_p \leqq \lambda_i + \Delta \lambda_x \tag{2}$$

$$\lambda_k - \Delta \lambda_y \leqq \lambda_p \leqq \lambda_{21} \tag{3}$$

Accordingly, if the above equation (2) occurs, the wavelength of the signal light in the range ($\lambda_{12} \leqq \lambda_p \leqq \lambda_i + \Delta \lambda_x$) may be selected not to be overlapped with the wavelength of the pumping light, and, if the above equation (3) occurs, the wavelength of the signal light in the range ($\lambda_k - \Delta \lambda_y \leqq \Delta \lambda_p \leqq \lambda_{21}$) may be selected not to be overlapped with the wavelength of the pumping light.

In a wavelength division multiplexing optical transmission system according to a first aspect of the present invention, wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands. The present invention according to the first aspect is characterized in that, if the wavelength of the pumping light belongs to the wavelength band before or after the wavelength conversion, the wavelength of the wavelength division multiplexed signal light in the wavelength band, which is not the object to be subjected to wavelength conversion, and the wavelength of the pumping light are shifted from each other to be arranged without overlapping with each other.

In a wavelength division multiplexing optical transmission system according to a second aspect of the present invention, wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands. The present invention according to the second aspect is characterized in that, if the wavelength of the pumping light belongs to the wavelength band before or after the wavelength conversion, the wavelength of the wavelength division multiplexed signal light in the wavelength band, which is not the object to be subjected to wavelength conversion, is shifted from the wavelength of the pumping light so that both wavelengths are arranged not to be overlapped with each other.

In a wavelength division multiplexing optical transmission system according to a third aspect of the present invention, wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands. The present invention according to the third aspect is characterized in that, if the wavelength of the pumping light belongs to the wavelength band before or after the wavelength conversion, the wavelength of the pumping light is shifted from the wavelength of the wavelength division multiplexed signal light in the wavelength band, which is not the object to be subjected to wavelength conversion, so that both wavelengths are arranged not to be overlapped with each other.

In a wavelength division multiplexing optical transmission system according to a fourth aspect of the present invention, wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands. The present invention according to the fourth aspect is characterized in that, if the wavelength of the pumping light belongs to the wavelength band before or after the wavelength conversion, the wavelength of the wavelength division multiplexed signal light in the wavelength band, which is not the object to be subjected to wavelength conversion, and the wavelength of the pumping light are shifted from each other to be arranged without overlapping with each other, and a band width of each wavelength band which is used in the wavelength conversion is set by using a wavelength width of a narrowest wavelength band as a reference and, in the other wavelength bands, bands other than the bands which are used in the wavelength conversion are further utilized to communication to another wavelength division multiplexing optical transmission system.

In a wavelength division multiplexing optical transmission system according to a fifth aspect of the present invention, wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands. The present invention according to the fifth aspect is characterized in that, if the wavelength of the pumping light belongs to the wavelength band before or after the wavelength conversion, the wavelength of the wavelength division multiplexed signal light in the wavelength band, which is not the object to be subjected to wavelength conversion, is shifted from the wavelength of the pumping light so that both wavelengths are arranged not to be overlapped with each other, and a band width of each wavelength band which is used in the wavelength conversion is set by using a wavelength width of a narrowest wavelength band as a reference and, in the other wavelength bands, bands other than the bands which are used in the wavelength conversion are further utilized to communication to another wavelength division multiplexing optical transmission system.

In a wavelength division multiplexing optical transmission system according to a sixth aspect of the present invention, wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands. The present invention according to the sixth aspect is characterized in that, if the wavelength of the pumping light belongs to the wavelength band before or after the wavelength conversion, the wavelength of the pumping light is shifted from the wavelength of the wavelength division multiplexed signal light in the wavelength band, which is not the object to be subjected to wavelength conversion, so that both wavelengths are arranged not to be overlapped with each other, and a band width of each wavelength band which is used in the wavelength conversion is set by using a wavelength width of a narrowest wavelength band as a reference and, in the other wavelength bands, bands other than the bands which are used in the wavelength conversion are further utilized to communication to another wavelength division multiplexing optical transmission system.

In a wavelength division multiplexing optical transmission system according to a seventh aspect of the present invention, wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands. The present invention according to the seventh aspect is characterized in that, if the wavelength of the pumping light belongs to the wavelength band before or after the wavelength conversion, the wavelength of the wavelength division multiplexed signal light in the wavelength band, which is not the object to be subjected to wavelength conversion, and the wavelength of the pumping light are shifted from each other to be arranged without overlapping with each other, and a band width of each wavelength band which is used in the wavelength conversion is set by using a wavelength width of a narrowest wavelength band as a reference and, in each wavelength band, only the bands which are used in the wavelength conversion are utilized.

In a wavelength division multiplexing optical transmission system according to an eighth aspect of the present invention, wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands. The present invention according to the eighth aspect is characterized in that, if the wavelength of the pumping light belongs to the wavelength band before or after the wavelength conversion, the wavelength of the wavelength division multiplexed signal light in the wavelength band, which is not the object to be subjected to wavelength conversion, is shifted from the wavelength of the pumping light so that both wavelengths are arranged not to be overlapped with each other, and a band width of each wavelength band which is used in the wavelength conversion is set by using a wavelength width of a narrowest wavelength band as a reference and, in each wavelength band, only the bands which are used in the wavelength conversion are utilized.

In a wavelength division multiplexing optical transmission system according to a ninth aspect of the present invention, wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands. The present invention according to the ninth aspect is characterized in that, if the wavelength of the pumping light belongs to the wavelength band before or after the wavelength conversion, the wavelength of the pumping light is shifted from the wavelength of the wavelength division multiplexed signal light in the wavelength band, which is not the object to be subjected to wavelength conversion, so that both wavelengths are arranged not to be overlapped with each other, and a band width of each wavelength band which is used in the wavelength conversion is set by using a wavelength width of a narrowest wavelength band as a reference and, in each wavelength band, only the bands which are used in the wavelength conversion are utilized.

In a wavelength division multiplexing optical transmission system according to a tenth aspect of the present invention, wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands. The present invention according to the tenth aspect is characterized in that, if the wavelength of the pumping light belongs to the wavelength band before or after the wavelength conversion, the wavelength of the wavelength division multiplexed signal light in the wavelength band, which is not the object to be subjected to wavelength conversion, and the wavelength of the pumping light are shifted from each other to be arranged without overlapping with each other, and two of different wavelength bands are a C-band which is a wavelength band from 1530 nm to 1565 nm and an L-band which is a wavelength band from 1569 nm to 1610 nm, and the wavelength conversion is carried out between these wavelength bands.

In a wavelength division multiplexing optical transmission system according to an eleventh aspect of the present invention, wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands. The present invention according to the eleventh aspect is characterized in that, if the wavelength of the pumping light belongs to the wavelength band before or after the wavelength conversion, the wavelength of the wavelength division multiplexed signal light in the wavelength band, which is not the object to be subjected to wavelength conversion, is shifted from the wavelength of the pumping light so that both wavelengths are arranged not to be overlapped with each other, and two of different wavelength bands are a C-band which is a wavelength band from 1530 nm to 1565 nm and an L-band which is a wavelength band from 1569 nm to 1610 nm, and the wavelength conversion is carried out between these wavelength bands.

In a wavelength division multiplexing optical transmission system according to a twelfth aspect of the present invention, wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands. The present invention according to the twelfth aspect is characterized in that, if the wavelength of the pumping light belongs to the wavelength band before or after the wavelength conversion, the wavelength of the pumping light is shifted from the wavelength of the wavelength division multiplexed signal light in the wavelength band, which is not the object to be subjected to wavelength conversion, so that both wavelengths are arranged not to be overlapped with each other, and two of different wavelength bands are a C-band which is a wavelength band from 1530 nm to 1565 nm and an L-band which is a wavelength band from 1569 nm to 1610 nm, and the wavelength conversion is carried out between these wavelength bands.

In a wavelength division multiplexing optical transmission system according to a thirteenth aspect of the present invention, wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands. The present invention according to the thirteenth aspect is characterized in that, if the wavelength of the pumping light belongs to the wavelength band before or after the wavelength conversion, the wavelength of the wavelength division multiplexed signal light in the wavelength band, which is not the object to be subjected to wavelength conversion, and the wavelength of the pumping light are shifted from each other to be arranged without overlapping with each other, and a band width of each wavelength band which is used in the wavelength conversion is set by using a wavelength width of a narrowest wavelength band as a reference and, in the other wavelength bands, bands other than the bands which are used in the wavelength conversion are further utilized to communication to another wavelength division multiplexing optical transmission system, and two of different wavelength bands are a C-band which is a wavelength band from 1530 nm to 1565 nm and an L-band which is a wavelength band from 1569 nm to 1610 nm, and the wavelength conversion is carried out between these wavelength bands.

In a wavelength division multiplexing optical transmission system according to a fourteenth aspect of the present invention, wavelength conversion between a wavelength division multiplexed signal light the wavelength of which ranges from a wavelength $\lambda_{11}$ to a wavelength $\lambda_{12}$ ($\lambda_{12} > \lambda_{12}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands. The present invention according to the fourteenth aspect is characterized in that, if the wavelength of the pumping light belongs to the wavelength band before or after the wavelength conversion, the wavelength of the wavelength division multiplexed signal light in the wavelength band, which is not the object to be subjected to wavelength conversion, is shifted from the wavelength of the pumping light so that both wavelengths are arranged not to be overlapped with each other, and a band width of each wavelength band which is used in the wavelength conversion is set by using a wavelength width of a narrowest wavelength band as a reference and, in the other wavelength bands, bands other than the bands which are used in the wavelength conversion are further utilized to communication to another wavelength division multiplexing optical transmission system, and two of different wavelength bands are a C-band which is a wavelength band from 1530 nm to 1565 nm and an L-band which is a wavelength band from 1569 nm to 1610 nm, and the wavelength conversion is carried out between these wavelength bands.

In a wavelength division multiplexing optical transmission system according to a fifteenth aspect of the present invention, wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands. The present invention according to the fifteenth aspect is characterized in that, if the wavelength of the pumping light belongs to the wavelength band before or after the wavelength conversion, the wavelength of the pumping light is shifted from the wavelength of the wavelength division multiplexed signal light in the wavelength band, which is not the object to be subjected to wavelength conversion, so that both wavelengths are arranged not to be overlapped with each other, and a band width of each wavelength band which is used in the wavelength conversion is set by using a wavelength width of a narrowest wavelength band as a reference and, in the other wavelength bands, bands other than the bands which are used in the wavelength conversion are further utilized to communication to another wavelength division multiplexing optical transmission system, and two of different wavelength bands are a C-band which is a wavelength band from 1530 nm to 1565 nm and an L-band which is a wavelength band from 1569 nm to 1610 nm, and the wavelength conversion is carried out between these wavelength bands.

In a wavelength division multiplexing optical transmission system according to a sixteenth aspect of the present invention, wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands. The present invention according to the sixteenth aspect is characterized in that, if the wavelength of the pumping light belongs to the wavelength band before or after the wavelength conversion, the wavelength of the wavelength division multiplexed signal light in the wavelength band, which is not the object to be subjected to wavelength conversion, and the wavelength of the pumping light are shifted from each other to be arranged without overlapping with each other, and a band width of each wavelength band which is used in the wavelength conversion is set by using a wavelength width of a narrowest wavelength band as a reference and, in each wavelength band, only the bands which are used in the wavelength conversion are utilized, and two of different wavelength bands are a C-band which is a wavelength band from 1530 nm to 1565 nm and an L-band which is a wavelength band from 1569 nm to 1610 nm, and the wavelength conversion is carried out between these wavelength bands.

In a wavelength division multiplexing optical transmission system according to a seventeenth aspect of the present invention, wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands. The present invention according to the seventeenth aspect is characterized in that, if the wavelength of the pumping light belongs to the wavelength band before or after the wavelength conversion, the wavelength of the wavelength division multiplexed signal light in the wavelength band, which is not the abject to be subjected to wavelength conversion, is shifted from the wavelength of the pumping light so that both wavelengths are arranged not to be overlapped with each other, and a band width of each wavelength band which is used in the wavelength conversion is set by using a wavelength width of a narrowest wavelength band as a reference and, in each wavelength band, only the bands which are used in the wavelength conversion are utilized, and two of different wavelength bands are a C-band which is a wavelength band from 1530 nm to 1565 nm and an L-band which is a wavelength band from 1569 nm to 1610 nm, and the wavelength conversion is carried out between these wavelength bands.

In a wavelength division multiplexing optical transmission system according to an eighteenth aspect of the present invention, wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands. The present invention according to the eighteenth aspect is characterized in that, if the wavelength of the pumping light belongs to the wavelength band before or after the wavelength conversion, the wavelength of the pumping light is shifted from the wavelength of the wavelength division multiplexed signal light in the wavelength band, which is not the object to be subjected to wavelength conversion, so that both wavelengths are arranged not to be overlapped with each other, and a band width of each wavelength band which is used in the wavelength conversion is set by using a wavelength width of a narrowest wavelength band as a reference and, in each wavelength band, only the bands which are used in the wavelength conversion are utilized, and two of different wavelength bands are a C-band which is a wavelength band from 1530 nm to 1565 nm and an L-band which is a wavelength band from 1569 nm to 1610 nm, and the wavelength conversion is carried out between these wavelength bands.

According to a nineteenth aspect of the present invention, in the wavelength division multiplexing optical transmission system according to any one of first to eighteenth aspects, the wavelength conversion is carried out between two or more independent wavelength division multiplexing optical transmission systems, and two or more wavelength division multiplexing optical transmission systems constitute a single wavelength division multiplexing optical transmission system.

In a wavelength converter for wavelength division multiplexing optical transmission according to a twentieth aspect of the present invention, wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands. The present invention according to the twentieth aspect is characterized in that, if the wavelength of the pumping light belongs to the wavelength band before or after the wavelength conversion, the wavelength of the wavelength division multiplexed signal light in the wavelength band, which is not the object to be subjected to wavelength conversion, and the wavelength of the pumping light are shifted from each other to be set without overlapping with each other.

In a wavelength converter for wavelength division multiplexing optical transmission according to a twenty-first aspect of the present invention, wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands. The present invention according to the twenty-first aspect is characterized in that, if the wavelength of the pumping light belongs to the wavelength band before or after the wavelength conversion, the wavelength of the wavelength division multiplexed signal light in the wavelength band, which is not the object to be subjected to wavelength conversion, is shifted from the wavelength of the pumping light so that both wavelengths are set not to be overlapped with each other.

In a wavelength converter for wavelength division multiplexing optical transmission according to a twenty-second aspect of the present invention, wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands. The present invention according to the twenty-first aspect is characterized in that, if the wavelength of the pumping light belongs to the wavelength band before or after the wavelength conversion, the wavelength of the pumping light is shifted from the wavelength of the wavelength division multiplexed signal light in the wavelength band, which is not the object to be subjected to wavelength conversion, so that both wavelengths are set not to be overlapped with each other.

According to a twenty-third aspect of the present invention, the wavelength converter for wavelength division multiplexing optical transmission according to any one of twentieth to twenty-second aspects carries out the wave conversion between a wavelength division multiplexed signal light the wavelength of which ranges from a wavelength 1530 nm to a wavelength 1565 nm and a wavelength division multiplexed signal light the wavelength of which ranges from a wavelength 1569 nm to a wavelength 1610 nm.

According to a twenty-fourth aspect of the present invention, the wavelength converter for wavelength division multiplexing optical transmission according to any one of twentieth to twenty-second aspects carries out the wave conversion between a wavelength division multiplexed signal light the wavelength of which ranges from a wavelength 1530 nm to a wavelength 1538 nm and a wavelength division multiplexed signal light the wavelength of which ranges from a wavelength 1540 nm to a wavelength 1570 nm.

According to a twenty-fifth aspect of the present invention, the wavelength converter for wavelength division multiplexing optical transmission according to any one of twentieth to twenty-second aspects carries out the wave conversion between a wavelength division multiplexed signal light the wavelength of which ranges from a wavelength 1540 nm to a wavelength 1570 nm and a wavelength division multiplexed signal light the wavelength of which ranges from a wavelength 1570 nm to a wavelength 1610 nm.

According to a twenty-sixth aspect of the present invention, the wavelength converter for wavelength division multiplexing optical transmission according to any one of twentieth to twenty-second aspects carries out the wave conversion between a wavelength division multiplexed signal light the wavelength of which ranges from a wavelength 1530 nm to a wavelength 1538 nm and a wavelength division multiplexed signal light the wavelength of which ranges from a wavelength 1570 nm to a wavelength 1610 nm.

BRIEF DESCRIPTION OF THE DRAWINGS

Fig. 1 is a schematic view showing an embodiment of a wavelength converter for wavelength division multiplexing optical transmission according to the present invention;
Fig. 2 is an explanatory view of a wavelength division multiplexing optical transmission system according to a first embodiment of the present invention, showing signal lights in the system;
Fig. 3 is an explanatory view of a wavelength division multiplexing optical transmission system according to a second embodiment of the present invention, showing the system schematically and signal lights in the system;
Fig. 4 is an explanatory view of a wavelength division multiplexing optical transmission system according to a third embodiment of the present invention, showing signal lights in the system;
Fig. 5 is an explanatory view showing a wavelength depending property of EDFA;
Fig. 6 is an explanatory view showing an example of wavelength conversion by four wave mixing;
Fig. 7 is an explanatory view showing an example of a communication system in which independent systems are connected by a wavelength converter; and
Fig. 8 is an explanatory view showing another example of a communication system in which independent systems are connected by a wavelength converter.

BEST MODES FOR CARRYING OUT THE INVENTION

(First embodiment of a wavelength converter for wavelength division multiplexing optical transmission)

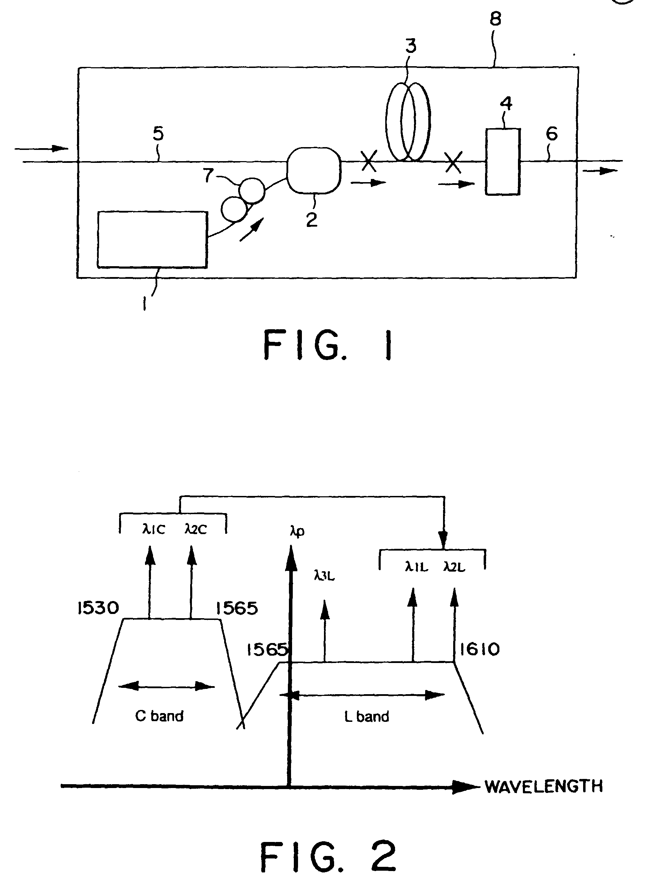

Fig. 1 shows an embodiment of a wavelength converter for wavelength division multiplexing optical transmission according to the present invention. The wavelength converter 8 comprises an optical fiber 5 into which a wavelength division multiplexed signal light for wavelength conversion is inputted, a pumping light source 1 for generating a pumping light, a light combining device 2 for incorporating the pumping light into the optical fiber 5, a high non-linear optical fiber 3 for propagating the wavelength division multiplexed signal light and the pumping light to cause four wave mixing, an optical filter 4 for obtaining a target wavelength light among various wavelength lights generated by the four wave mixing, and an optical fiber 6 for outputting a wavelength division multiplexed signal light which was obtained from the optical filter 4 and the wavelength of which was converted; and a polarization adjuster 7 for effectively causing the four wave mixing in the high non-linear optical fiber 3 is provided between the pumping light source 1 and the light combining device 2.

An emitting wavelength of the pumping light source 1 and permeable wavelength of the optical filter 4 are set to have proper values, respectively. The emitting wavelength of the pumping light source 1 can be determined by a wavelength band of the wavelength division multiplexed signal light inputted to the optical fiber 5 and a wavelength band of the wavelength division multiplexed signal light outputted from the optical fiber 6, and, more specifically, in order to convert the wavelength division multiplexed signal light the wavelength of which ranges from a wavelength $\lambda_{11}$ to a wavelength $\lambda_{12}$ ($\lambda_{12} > \lambda_{11}$) into the wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) (or vice versa), a wavelength $\lambda_p$ of the pumping light is set to a wavelength determined by the above-mentioned equation (1), on the basis of the phase matching condition of four wave mixing. Further, the optical filter 4 is set to permit to permeation of light having a wavelength which ranges from the wavelength $\lambda_{21}$ to the wavelength $\lambda_{22}$.

The following Table 2 shows several examples of wavelength conversion and the required wavelengths $\lambda_p$ of the pumping light.

Table 2

| $\lambda_{11}$ | $\lambda_{12}$ | $\lambda_{21}$ | $\lambda_{22}$ | $\lambda_p$ |
|---|---|---|---|---|
| 1530 nm | 1565 nm | 1569 nm | 1610 nm | 1567. 0 nm |
| 1530 nm | 1538 nm | 1540 nm | 1570 nm | 1539. 0 nm |
| 1540 nm | 1570 nm | 1570 nm | 1610 nm | 1570. 0 nm |
| 1530 nm | 1538 nm | 1570 nm | 1610 nm | 1553.8 nm |

The wavelengths $\lambda_p$ of the pumping light generated from the pumping light source 1 is determined by wavelengths before and after wavelength conversion, and it may be designed so that wavelength adjustment can be effected more or less in each wavelength conversion.

(First embodiment of wavelength division multiplexing optical transmission system)

In the EDFA in which gain is flattened, regarding the wavelength division multiplexing optical transmission system having a wavelength band ranging from 1530 nm to 1565 nm (35 nm), which is referred to as C-band, and a wavelength band ranging from 1569 nm to 1610 nm (41 nm), which is referred to as L-band, among the reported examples in the above Table 1, in case of NTT, a signal light of 20 ch (channels) can be transmitted to the C-band, a signal light of 30 ch can be transmitted to the L-band and thus a signal light of 50 ch (in total) can be transmitted to a single optical fiber. In the illustrated embodiment, two independent systems, i.e., a system having only C-band (referred to as "system C" hereinafter) and a system having only L-band (referred to as "system L" hereinafter) are prepared so that a single wavelength division multiplexing optical transmission system is constructed by interconnecting these two systems via a wavelength converter 8 designed as shown in Fig. 1.

Regarding the system C and the system L, since the band of the system C is narrower than the band of the system L, all of the bands of the systems C are collectively wavelength-converted to any band of the system L. For clarity's sake, it is assumed that two-wave WDM is carried out in the system C and three-wave WDM is carried out in the system L. Between these two systems C and L, when two waves in the system C is transferred to the system L (or vice versa), the wavelength $\lambda_p$ of the pumping light of the wavelength converter is determined in dependence upon the wavelength in the system L to be converted from the wavelength in the system C, and, in an example shown in Fig. 2, the wavelength $\lambda_p$ is determined on the basis of the following equation (4):

$$\lambda_p = 2\lambda_{1L}\lambda_{2C}/(\lambda_{1L} + \lambda_{2C}) \tag{4}$$

As shown in Fig. 2, when the wavelength $\lambda_p$ of the pumping light belongs to the band of the system L into which the wavelength is converted, since inconvenience in which the signal light having a wavelength $\lambda_{3L}$ in the system L, which is not the object to be subjected to wavelength conversion, is overlapped with the pumping light, it is required that the wavelength $\lambda_p$ of the pumping light be shifted from the wavelength $\lambda_{3L}$. More specifically, if the signal lights in the system C have a wavelength $\lambda_{1C}$ (=1540 nm) and a wavelength $\lambda_{2C}$ (=1550 nm), when the wavelength $\lambda_{2C}$ is converted into a wavelength $\lambda_{1L}$ (=1600 nm), the wavelength $\lambda_p$ of the pumping light is required to be 1575 nm. In this case, the signal light having the wavelength $\lambda_{1C}$ is converted into a wavelength $\lambda_{3L}$ (= 1610 nm). The wavelength $\lambda_p$ of the pumping light belongs to the band of the system L, so that the pumping light may be overlapped with the signal light in said band, which is not the object to be subjected to the wavelength conversion. If overlapped, the wavelength $\lambda_p$ of the pumping light is shifted to a wavelength which is not overlapped with any one of wavelength in the system L, which is not the object to be subjected to the wavelength conversion. As a result, although the wavelength after the wavelength conversion is changed, so long as the changed wavelength belongs to the band of the system L, the signal light can be transmitted. In this way, the overlapping between the wavelength of the signal light and the wavelength of the pumping light can be avoided.

(Second embodiment of wavelength division multiplexing optical transmission system)

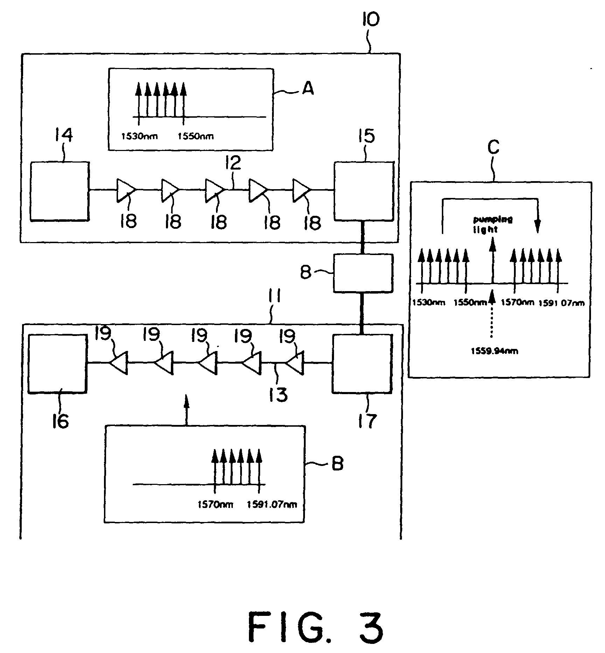

As shown in Fig. 3, a system 10 in which wavelength division multiplexing transmission is carried out by using a wavelength band having a wavelength ranging from 1530 nm to 1550 nm in the C-band, and an independent system 11 in which wavelength division multiplexing transmission is carried out by using a wavelength band having a wavelength ranging from 1570 nm to 1591.07 nm in the L-band are prepared. In the system 10, terminal stations 14 and 15 are interconnected via an optical fiber cable 12 to which EDFAs 18 are attached, and the optical fiber cable 12 and the EDFAs 18 are optimized to carry out signal transmission of wavelength division multiplexed signal light shown in A of Fig. 3. Similarly, in the system 11, terminal stations 16 and 17 are interconnected via an optical fiber cable 13 to which EDFAs 19 are attached, and the optical fiber cable 13 and the EDFAs 19 are optimized to carry out signal transmission of wavelength division multiplexed signal light shown in B of Fig. 3. In the illustrated embodiment, these two systems 10, 11 are interconnected via the wavelength converter 8 designed as shown in Fig. 1 to constitute a single system. If the terminal stations 15, 17 of the systems 10, 11 are interconnected via an optical fiber cable without using the wavelength converter 8, although the signal (A in Fig. 3) sent from the terminal station 15 and received by the terminal station 17 is transmitted to the terminal station 16 as it is, since the area between the terminal stations 16 and 17 is optimized to be suitable for the wavelength division multiplexed signal light shown in B of Fig. 3, the signal (A in Fig. 3) from the terminal station 15 cannot be transmitted to the terminal station 16 properly.
In the illustrated embodiment, the terminal stations 15 and 17 are interconnected via the wavelength converter 8 having a pumping light wavelength $\lambda_p$ (= 1559.94 nm) so that, as shown in C of Fig. 3, since a C-band signal of the terminal station 15 is band-converted into an L-band signal and then is transmitted to the system 11, signal transmission between two systems 10 and 11 can be carried out without deterioration. Incidentally, if the transmission bands of the systems 10, 11 have any play so that the signal light having the wavelength which is not the object to be subjected to wavelength conversion can be transmitted, the signal light can be transmitted by arranging the signal light to a wavelength which does not coincide with the wavelength $\lambda_p$ of the pumping light.

(Third embodiment of wavelength division multiplexing optical transmission system)

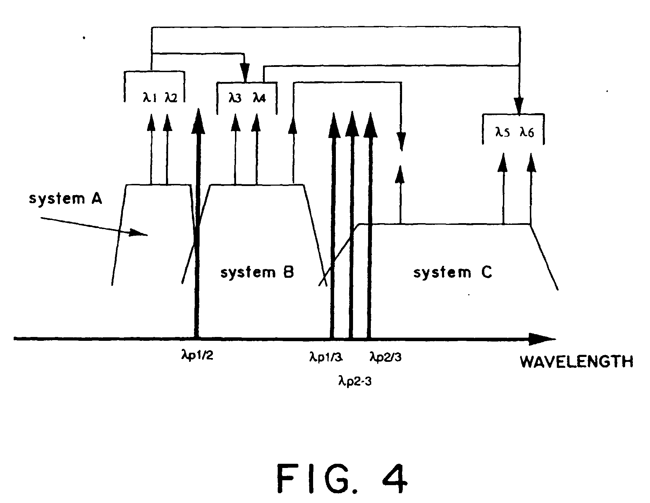

A wavelength division multiplexing optical transmission system A having a 1530 nm band and a wavelength division multiplexing optical transmission system B having a 1560 nm band and a wavelength division multiplexing optical transmission system C having a 1610 nm band are prepared, and these three systems A, B and C are interconnected via the wavelength converters 8 shown in Fig. 1 to constitute a single system. Here, as shown in Fig. 4, in order to simplify explanation, it is assumed that the system A carries out two-wave WDM and the systems B, C carry out three-wave WDM.
Regarding these systems A, B, C, since the band of the system A is narrowest, in order to effect the wavelength conversions between the systems A, B and C to share information, the band width of the system A may be an upper limit. For example, two waves of the signals light can be shared as a pumping light having a wavelength $\lambda_{p1/2}$ between the systems A and B, two waves of the signals light can be shared as a pumping light having a wavelength $\lambda_{p1/3}$ between the systems A and C, and two waves of the signals light can be shared as a pumping light having a wavelength $\lambda_{p2/3}$ between the systems B and C. Further, in this case, in the systems B, C having wider bands, since there are bands which are not the objects to be subjected to the wavelength conversion, one wave of the signal lights can be shared in such bands by wavelength conversion by means of another pumping light having a wavelength $\lambda_{p2\text{-}3}$.

Availability in Industry

According to the wavelength division multiplexing optical transmission system and the wavelength converter for wavelength division multiplexing optical transmission according to the present invention, even in the wavelength division multiplexing optical transmission system in which a number of signal lights are arranged in the limited bands, the overlapping between the pumping light for wavelength conversion and the signal light can be prevented, thereby utilizing the bands efficiently.

**Claims**

1. A wavelength division multiplexing optical transmission system according in which wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands, wherein:

   if the wavelength of the pumping light belongs to the wavelength band before or after the wavelength conversion, the wavelength of the wavelength division multiplexed signal light in said wavelength band, which is not the object to be subjected to wavelength conversion, and the wavelength of the pumping light are shifted from each other to be arranged without overlapping with each other.

2. A wavelength division multiplexing optical transmission system according in which wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands, wherein:

   if the wavelength of the pumping light belongs to the wavelength band before or after the wavelength conversion, the wavelength of the wavelength division multiplexed signal light in said wavelength band, which is not the object to be subjected to wavelength conversion, is shifted from the wavelength of the pumping light so that both wavelengths are arranged not to be overlapped with each other.

3. A wavelength division multiplexing optical transmission system according in which wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands, wherein:

   if the wavelength of the pumping light belongs to the wavelength band before or after the wavelength conversion, the wavelength of the pumping light is shifted from the wavelength of the wavelength division multiplexed signal light in said wavelength band, which is not the object to be subjected to wavelength conversion, so that both wavelengths are arranged not to be overlapped with each other.

4. A wavelength division multiplexing optical transmission system according in which wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands, wherein:

   if the wavelength of the pumping light belongs to the wavelength band before or after the wavelength conversion, the wavelength of the wavelength division multiplexed signal light in said wavelength band, which is not the object to be subjected to wavelength conversion, and the wavelength of the pumping light are shifted from each other to be arranged without overlapping with each other, and a band width of each wavelength band which is used in the wavelength conversion is set by using a wavelength width of a narrowest wavelength band as a reference and, in the other wavelength bands, bands other than the bands which are used in the wavelength conversion are further utilized to communication to another wavelength division multiplexing optical transmission system.

**5.** A wavelength division multiplexing optical transmission system according in which wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands, wherein:

if the wavelength of the pumping light belongs to the wavelength band before or after the wavelength conversion, the wavelength of the wavelength division multiplexed signal light in said wavelength band, which is not the object to be subjected to wavelength conversion, is shifted from the wavelength of the pumping light so that both wavelengths are arranged not to be overlapped with each other, and a band width of each wavelength band which is used in the wavelength conversion is set by using a wavelength width of a narrowest wavelength band as a reference and, in the other wavelength bands, bands other than the bands which are used in the wavelength conversion are further utilized to communication to another wavelength division multiplexing optical transmission system.

**6.** A wavelength division multiplexing optical transmission system according in which wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands, wherein:

if the wavelength of the pumping light belongs to the wavelength band before or after the wavelength conversion, the wavelength of the pumping light is shifted from the wavelength of the wavelength division multiplexed signal light in said wavelength band, which is not the object to be subjected to wavelength conversion, so that both wavelengths are arranged not to be overlapped with each other, and a band width of each wavelength band which is used in the wavelength conversion is set by using a wavelength width of a narrowest wavelength band as a reference and, in the other wavelength bands, bands other than the bands which are used in the wavelength conversion are further utilized to communication to another wavelength division multiplexing optical transmission system.

**7.** A wavelength division multiplexing optical transmission system according in which wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands, wherein:

if the wavelength of the pumping light belongs to the wavelength band before or after the wavelength conversion, the wavelength of the wavelength division multiplexed signal light in said wavelength band, which is not the object to be subjected to wavelength conversion, and the wavelength of the pumping light are shifted from each other to be arranged without overlapping with each other, and a band width of each wavelength band which is used in the wavelength conversion is set by using a wavelength width of a narrowest wavelength band as a reference and, in each wavelength band, only the bands which are used in the wavelength conversion are utilized.

**8.** A wavelength division multiplexing optical transmission system according in which wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands, wherein:

if the wavelength of the pumping light belongs to the wavelength band before or after the wavelength conversion, the wavelength of the wavelength division multiplexed signal light in said wavelength band, which is not the object to be subjected to wavelength conversion, is shifted from the wavelength of the pumping light so that both wavelengths are arranged not to be overlapped with each other, and a band width of each wavelength band which is used in the wavelength conversion is set by using a wavelength width of a narrowest wavelength band as a reference and, in each wavelength band, only the bands which are used in the wavelength conversion are utilized.

9. A wavelength division multiplexing optical transmission system according in which wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands, wherein:

if the wavelength of the pumping light belongs to the wavelength band before or after the wavelength conversion, the wavelength of the pumping light is shifted from the wavelength of the wavelength division multiplexed signal light in said wavelength band, which is not the object to be subjected to wavelength conversion, so that both wavelengths are arranged not to be overlapped with each other, and a band width of each wavelength band which is used in the wavelength conversion is set by using a wavelength width of a narrowest wavelength band as a reference and, in each wavelength band, only the bands which are used in the wavelength conversion are utilized.

10. A wavelength division multiplexing optical transmission system according in which wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands, wherein:

if the wavelength of the pumping light belongs to the wavelength band before or after the wavelength conversion, the wavelength of the wavelength division multiplexed signal light in said wavelength band, which is not the object to be subjected to wavelength conversion, and the wavelength of the pumping light are shifted from each other to be arranged without overlapping with each other, and two of different wavelength bands are a C-band which is a wavelength band from 1530 nm to 1565 nm and an L-band which is a wavelength band from 1569 nm to 1610 nm, and the wavelength conversion is carried out between these wavelength bands.

11. A wavelength division multiplexing optical transmission system according in which wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{21} + \lambda_{21})$) under the phase matching condition of four wave mixing, thereby realizing wavelength division multiplexing communication between different wavelength bands, wherein:

if the wavelength of the pumping light belongs to the wavelength band before or after the wavelength conversion, the wavelength of the wavelength division multiplexed signal light in said wavelength band, which is not the object to be subjected to wavelength conversion, is shifted from the wavelength of the pumping light so that both wavelengths are arranged not to be overlapped with each other, and two of different wavelength bands are a C-band which is a wavelength band from 1530 nm to 1565 nm and an L-band which is a wavelength band from 1569 nm to 1610 nm, and the wavelength conversion is carried out between these wavelength bands.

12. A wavelength division multiplexing optical transmission system according in which wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22}$

$> \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$ )under the phase matching condition of four wave mixing, thereby realizing wavelength division multiplexing communication between different wavelength bands, wherein:

if the wavelength of the pumping light belongs to the wavelength band before or after the wavelength conversion, the wavelength of the pumping light is shifted from the wavelength of the wavelength division multiplexed signal light in said wavelength band, which is not the object to be subjected to wavelength conversion, so that both wavelengths are arranged not to be overlapped with each other, and two of different wavelength bands are a C-band which is a wavelength band from 1530 nm to 1565 nm and an L-band which is a wavelength band from 1569 nm to 1610 nm, and the wavelength conversion is carried out between these wavelength bands.

**13.** A wavelength division multiplexing optical transmission system according in which wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$ ) under the phase matching condition of four wave mixing, thereby realizing wavelength division multiplexing communication between different wavelength bands, wherein:

if the wavelength of the pumping light belongs to the wavelength band before or after the wavelength conversion, the wavelength of the wavelength division multiplexed signal light in said wavelength band, which is not the object to be subjected to wavelength conversion, and the wavelength of the pumping light are shifted from each other to be arranged without overlapping with each other, and a band width of each wavelength band which is used in the wavelength conversion is set by using a wavelength width of a narrowest wavelength band as a reference and, in the other wavelength bands, bands other than the bands which are used in the wavelength conversion are further utilized to communication to another wavelength division multiplexing optical transmission system, and two of different wavelength bands are a C-band which is a wavelength band from 1530 nm to 1565 nm and an L-band which is a wavelength band from 1569 nm to 1610 nm, and the wavelength conversion is carried out between these wavelength bands.

**14.** A wavelength division multiplexing optical transmission system according in which wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$)to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands, wherein:

if the wavelength of the pumping light belongs to the wavelength band before or after the wavelength conversion, the wavelength of the wavelength division multiplexed signal light in said wavelength band, which is not the object to be subjected to wavelength conversion, is shifted from the wavelength of the pumping light so that both wavelengths are arranged not to be overlapped with each other, and a band width of each wavelength band which is used in the wavelength conversion is set by using a wavelength width of a narrowest wavelength band as a reference and, in the other wavelength bands, bands other than the bands which are used in the wavelength conversion are further utilized to communication to another wavelength division multiplexing optical transmission system, and two of different wavelength bands are a C-band which is a wavelength band from 1530 nm to 1565 nm and an L-band which is a wavelength band from 1569 nm to 1610 nm, and the wavelength conversion is carried out between these wavelength bands.

**15.** A wavelength division multiplexing optical transmission system according in which wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands, wherein:

if the wavelength of the pumping light belongs to the wavelength band before or after the wavelength conversion, the wavelength of the pumping light is shifted from the wavelength of the wavelength division multiplexed signal light in said wavelength band, which is not the object to be subjected to wavelength conversion, so that both wavelengths are arranged not to be overlapped with each other, and a band width of each wavelength band which is used in the wavelength conversion is set by using a wavelength width of a narrowest wavelength band as a reference and, in the other wavelength bands, bands other than the bands which are used in the wavelength conversion are further utilized to communication to another wavelength division multiplexing optical transmission system, and two of different wavelength bands are a C-band which is a wavelength band from 1530 nm to 1565 nm and an L-band which is a wavelength band from 1569 nm to 1610 nm, and the wavelength conversion is carried out between these wavelength bands.

16. A wavelength division multiplexing optical transmission system according in which wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands, wherein:

if the wavelength of the pumping light belongs to the wavelength band before or after the wavelength conversion, the wavelength of the wavelength division multiplexed signal light in said wavelength band, which is not the object to be subjected to wavelength conversion, and the wavelength of the pumping light are shifted from each other to be arranged without overlapping with each other, and a band width of each wavelength band which is used in the wavelength conversion is set by using a wavelength width of a narrowest wavelength band as a reference and, in each wavelength band, only the bands which are used in the wavelength conversion are utilized, and two of different wavelength bands are a C-band which is a wavelength band from 1530 nm to 1565 nm and an L-band which is a wavelength band from 1569 nm to 1610 nm, and the wavelength conversion is carried out between these wavelength bands.

17. A wavelength division multiplexing optical transmission system according in which wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands, wherein:

if the wavelength of the pumping light belongs to the wavelength band before or after the wavelength conversion, the wavelength of the wavelength division multiplexed signal light in said wavelength band, which is not the object to be subjected to wavelength conversion, is shifted from the wavelength of the pumping light so that both wavelengths are arranged not to be overlapped with each other, and a band width of each wavelength band which is used in the wavelength conversion is set by using a wavelength width of a narrowest wavelength band as a reference and, in each wavelength band, only the bands which are used in the wavelength conversion are utilized, and two of different wavelength bands are a C-band which is a wavelength band from 1530 nm to 1565 nm and an L-band which is a wavelength band from 1569 nm to 1610 nm, and the wavelength conversion is carried out between these wavelength bands.

18. A wavelength division multiplexing optical transmission system according in which wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands, wherein:

if the wavelength of the pumping light belongs to the wavelength band before or after the wavelength conversion, the wavelength of the pumping light is shifted from the wavelength of the wavelength division multiplexed signal light in said wavelength band, which is not the object to be subjected to wavelength conversion, so that both wavelengths are arranged not to be overlapped with each other, and a band width of each wavelength band which is used in the wavelength conversion is set by using a wavelength width of a narrowest wavelength band as a reference and, in each wavelength band, only the bands which are used in the wavelength conversion are utilized, and two of different wavelength bands are a C-band which is a wavelength band from 1530 nm to 1565 nm and an L-band which is a wavelength band from 1569 nm to 1610 nm, and the wavelength conversion is carried out between these wavelength bands.

19. A wavelength division multiplexing optical transmission system according to any one of claims 1 to 18, wherein the wavelength conversion is carried out between two or more independent wavelength division multiplexing optical transmission systems, and said two or more wavelength division multiplexing optical transmission systems constitute a single wavelength division multiplexing optical transmission system.

20. A wavelength converter for wavelength division multiplexing optical transmission in which wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands, wherein:

if the wavelength of the pumping light belongs to the wavelength band before or after the wavelength conversion, the wavelength of the wavelength division multiplexed signal light in said wavelength band, which is not the object to be subjected to wavelength conversion, and the wavelength of the pumping light are shifted from each other to be set without overlapping with each other.

21. A wavelength converter for wavelength division multiplexing optical transmission in which wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands, wherein:

if the wavelength of the pumping light belongs to the wavelength band before or after the wavelength conversion, the wavelength of the wavelength division multiplexed signal light in said wavelength band, which is not the object to be subjected to wavelength conversion, is shifted from the wavelength of the pumping light so that both wavelengths are set not to be overlapped with each other.

22. A wavelength converter for wavelength division multiplexing optical transmission in which wavelength conversion between a wavelength division multiplexed signal light the wavelength of which ranges from a wavelength $\lambda_{11}$ to a wavelength $\lambda_{12}$ ($\lambda_{12} > \lambda_{11}$) both belonging to one of two or more different wavelength bands and a wavelength division multiplexed signal light the wavelength of which ranges from a wavelength $\lambda_{21}$ ($\lambda_{21} > \lambda_{12}$) to a wavelength $\lambda_{22}$ ($\lambda_{22} > \lambda_{21}$) both belonging to the other wavelength band is carried out by using a pumping light having a wavelength $\lambda_p$ ($\lambda_p = 2\lambda_{12}\lambda_{21}/(\lambda_{12} + \lambda_{21})$) under the phase matching condition of four wave mixing, thereby realizing wavelength division multiplexing communication between different wavelength bands, wherein:

if the wavelength of the pumping light belongs to the wavelength band before or after the wavelength conversion, the wavelength of the pumping light is shifted from the wavelength of the wavelength division multiplexed signal light in said wavelength band, which is not the object to be subjected to wavelength conversion, so that both wavelengths are set not to be overlapped with each other.

23. A wavelength converter for wavelength division multiplexing optical transmission according to any one of claims 20 to 22, wherein:

the wave conversion between a wavelength division multiplexed signal light the wavelength of which ranges from a wavelength 1530 nm to a wavelength 1565 nm and a wavelength division multiplexed signal light the wavelength of which ranges from a wavelength 1569 nm to a wavelength 1610 nm is carried out.

24. A wavelength converter for wavelength division multiplexing optical transmission according to any one of claims 20 to 22, wherein:

the wave conversion between a wavelength division multiplexed signal light the wavelength of which ranges from a wavelength 1530 nm to a wavelength 1538 nm and a wavelength division multiplexed signal light the wavelength of which ranges from a wavelength 1540 nm to a wavelength 1570 nm is carried out.

**25.** A wavelength converter for wavelength division multiplexing optical transmission according to any one of claims 20 to 22, wherein:

the wave conversion between a wavelength division multiplexed signal light the wavelength of which ranges from a wavelength 1540 nm to a wavelength 1570 nm and a wavelength division multiplexed signal light the wavelength of which ranges from a wavelength 1570 nm to a wavelength 1610 nm is carried out.

**26.** A wavelength converter for wavelength division multiplexing optical transmission according to any one of claims 20 to 22, wherein:

the wave conversion between a wavelength division multiplexed signal light the wavelength of which ranges from a wavelength 1530 nm to a wavelength 1538 nm and a wavelength division multiplexed signal light the wavelength of which ranges from a wavelength 1570 nm to a wavelength 1610 nm is carried out.

FIG. 1

FIG. 2

10

A

1530nm    1550nm

14

18  18  18  18  18

15

12

8

C

pumping
light

1530nm    1550nm    1570nm  1591 07nm

1559.94nm

11

19  19  19  19  19

16

13

17

B

1570nm    1591.07nm

# FIG. 3

system A

system B

system C

$\lambda1$ $\lambda2$  $\lambda3$ $\lambda4$  $\lambda5$ $\lambda6$

$\lambda p1/2$  $\lambda p1/3$  $\lambda p2/3$

$\lambda p2\text{-}3$

WAVELENGTH

FIG. 4

FIG. 5

FIG. 6

# FIG. 7

# FIG. 8

# INTERNATIONAL SEARCH REPORT

| | International application No. |
|---|---|
| | PCT/JP99/03414 |

**A. CLASSIFICATION OF SUBJECT MATTER**
    Int.Cl⁶ G02F1/35, H04J14/02

According to International Patent Classification (IPC) or to both national classification and IPC

**B. FIELDS SEARCHED**

Minimum documentation searched (classification system followed by classification symbols)
    Int.Cl⁶ G02F1/35-1/39, H04J14/00-14/02, H04B10/00-10/28

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-1999 |
| Kokai Jitsuyo Shinan Koho | 1971-1999 | Jitsuyo Shinan Toroku Koho | 1996-1999 |

Electronic data base consulted during the international search (name of data base and, where practicable, search terms used)
    JICST File (JOIS)

**C. DOCUMENTS CONSIDERED TO BE RELEVANT**

| Category* | Citation of document, with indication, where appropriate, of the relevant passages | Relevant to claim No. |
|---|---|---|
| A | WO, 98/08138, A1 (Fujitsu Ltd.), 26 February, 1998 (26. 02. 98), Full text | 1-26 |
| A | JP, 8-237226, A (Pirelli Cavi S.p.A.), 13 September, 1996 (13. 09. 96), Full text & EP, 717515, A1 & US, 5809196, A | 1-26 |
| E, A | JP, 10-232415, A (Fujitsu Ltd.), 2 September, 1998 (02. 09. 98), Full text & EP, 801452, A2 & US, 5920588, A | 1-26 |
| P, A | 24rd European Conference on Optical Communications, Vol. 3 pp.85-87, September 1998 S. Watanabe et al., "Interband Wavelength Conversion of 320 Gb/s (32*10 Gb/s) WDM Signal Using a polarization-Insensitive Fiber Four-Wave Mixer" | 1-26 |

[X] Further documents are listed in the continuation of Box C.     [ ] See patent family annex.

| | |
|---|---|
| * Special categories of cited documents: <br> "A" document defining the general state of the art which is not considered to be of particular relevance <br> "E" earlier document but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| 2 September, 1999 (02. 09. 99) | 21 September, 1999 (21. 09. 99) |

| Name and mailing address of the ISA/ <br> Japanese Patent Office | Authorized officer |
|---|---|
| | |
| Facsimile No. | Telephone No. |

Form PCT/ISA/210 (second sheet) (July 1992)

EP 1 008 898 A1

## INTERNATIONAL SEARCH REPORT

C (Continuation).   DOCUMENTS CONSIDERED TO BE RELEVANT

| Category* | Citation of document, with indication, where appropriate, of the relevant passages | Relevant to claim No. |
|---|---|---|
| A | 11th International Conference on Integrated Optics and Optical Fibre Communications / 23rd European Conference on Optical Communications, Vol. 5 pp.1-4, 25th September 1997 S. Watanabe et al., "TH3A Simultaneous Wavelength Conversion and Optical Phase Conjugation of 200Gb/s (5*40 Gb/s) WDM Signal Using a Highly Nonlinear Fiber Four-wave Mixer" | 1-26 |

Form PCT/ISA/210 (continuation of second sheet) (July 1992)

25